# EUROPEAN PATENT APPLICATION

(11) **EP 4 484 021 A1**
(43) Date of publication of application: **01.01.2025**
(21) Application number: 23181989.7
(22) Date of filing: 28.06.2023
(51) Int. Cl.: B05C 17/01, F16H 19/06

(54) **ACTUATOR AND TOOL COMPRISING THE SAME**

(71) Applicant: Hilti Aktiengesellschaft, 9494 Schaan (LI)
(72) Inventor: Roth, Peter, 9472 Grabs (CH); Meier, David, 7206 Igis (CH)
(74) Representative: Hilti Aktiengesellschaft Corporate Intellectual Property

(57) **Abstract**

An actuator and a tool are disclosed that comprise a control element (120) configured to move along a predetermined motion path, a first drive (140) that drives the control element in a first direction along the motion path, a pusher (130) configured to transmit a pushing force from the first drive onto the control element to drive the control element in the first direction, and a reel (170), wherein the pusher is wound on the reel.

## Description

### Background of the Invention

The invention relates to an actuator and a tool incorporating an actuator. Actuators are known to transmit forces e.g. for positioning objects in machinery, appliances, tools and vehicles. To this end, actuators often move a carriage or pawl along a motion path. Generally, types of actuators include single-action actuators and double-action actuators. Single-action actuators are usually capable of transmitting a force in one direction only, e.g. by pulling. Examples of single-action actuators typically comprise slack force-transmitting elements such as ropes, chains, wires, belts, ribbons, or tapes. Double-action actuators are usually capable of transmitting a force in two opposite directions, e.g. by pulling and pushing. Examples of double-action actuators typically comprise rigid force-transmitting elements such as rods, linkages, spindles, or gear racks.

One constraint with single-action actuators relates to resetting the actuator in a direction opposite the direction of action. Generally, there is a need of a secondary mechanism acting in that opposite direction, such as an additional actuator, however increasing complexity and costs. In some applications, single-action actuators act against gravity or the force of a bias spring, however consuming additional energy.

One constraint with double-action actuators relates to size. Usually, the force-transmitting element is at least as long as its travel length, doubling the space needed. Efforts have been made to reduce the space by the use of collapsible elements such as telescopic cylinders, however increasing complexity and costs.

### Brief Summary of the Invention

The above constraints are addressed by an actuator that comprises a control element configured to move along a predetermined motion path, a first drive that drives the control element in a first direction along the motion path, a pusher configured to transmit a pushing force from the first drive onto the control element to drive the control element in the first direction, and a reel, wherein the pusher is wound on the reel. Winding the pusher on the reel may allow for a reduction of space needed, without losing the capability of pushing the control element.

According to an embodiment, the actuator further comprises a second drive that drives the control element in a second direction opposite the first direction, wherein the pusher is configured to transmit a pulling force from the second drive onto the control element. In a preferred embodiment, the first drive and the second drive are identical. In another preferred embodiment, the first drive is different from the second drive.

According to another embodiment, the first drive comprises a rotor which drives the pusher in the direction of the pushing force.

According to another embodiment, the first drive comprises a motor that rotationally drives the rotor. In a preferred embodiment, the motor is an electric, hydraulic and/or pneumatic motor.

According to another embodiment, the rotor engages the pusher. In a preferred embodiment, the rotor engages the pusher by a friction lock and/or an interlock, such as a toothing.

According to another embodiment, the pusher comprises a plurality of recesses arranged along the first direction, wherein the rotor comprises a plurality of teeth engaging the recesses to drive the pusher.

According to another embodiment, the reel comprises the rotor. In a preferred embodiment, the pusher is wound on the rotor.

According to another embodiment, the first drive comprises a spring that biases the pusher in the direction of the pushing force. In a preferred embodiment, the pusher comprises the spring.

According to another embodiment, the motion path is straight. According to an alternative embodiment, the motion path is curved.

According to another embodiment, the pusher has a first end attached to the reel and/or a second end attached to the control element.

According to another embodiment, the pusher is formed as a belt. In a preferred embodiment, the pusher is formed as a metal, alloy or plastic belt. In another preferred embodiment, the belt bulges across the direction of the pushing force when the belt transmits the pushing force from the first drive onto the control element.

According to another embodiment, the pusher is formed as a wire. In a preferred embodiment, the pusher is formed as a metal, alloy or plastic wire.

According to another embodiment, the actuator comprises a guide element, such as a guide rail, configured to guide the pusher and/or the control element in the direction of the motion path. In a preferred embodiment, the guide element has a profile comprising a recess, and wherein the pusher and/or the control element is partly or completely received in the recess to guide the pusher and/or the control element in the direction of the motion path. In another preferred embodiment, the guide element has an entering end where the pusher enters the guide element when the pusher is unwound from the reel, and wherein the motion path, at the entering end, is oriented tangential to the reel and/or pusher wound on the reel. In an even more preferred embodiment, the entering end pivots about a pivot axis to accommodate for changes of a winding radius of the pusher on the reel. In another preferred embodiment, the guide element comprises a plurality of openings to remove contamination, such as dust.

According to another embodiment, the control element is a pawl.

According to another embodiment, the reel comprises a sprocket having a plurality of gear teeth, and wherein the pusher has a plurality of holes configured to engage with the plurality of gear teeth to drive the pusher.

According to another embodiment, the actuator comprises a controller, such as an electronic controller, configured to determine a position and/or a speed of the control element and to control driving the control element in dependence of a detected position and/or speed. In a preferred embodiment, the actuator further comprises a position sensor configured to detect a position of the control element and transmit a signal indicative of a detected position of the control element to the controller.

The above constraints are further addressed by a tool, such as a handheld tool, comprising a working piston configured to move along a working axis, a piston drive configured to drive the working piston along the working axis from a start position to an end position, and a piston reset device configured to reset the working piston from the end position to the start position and comprising an actuator as defined above. According to an embodiment, the tool is a driving tool comprising a receptacle configured to temporarily receive a fastening element, wherein the working piston drives the fastening element from the receptacle into a substrate when the piston drive drives the working piston from the start position to the end position.

### Brief Description of the Several Views of the Drawing

Further aspects and advantages of the fastening tool, associated parts and a method of use thereof will become apparent from the ensuing description that is given by way of example only and with reference to the accompanying drawings in which:
- Fig. 1: illustrates a side view of a driving device,
- Fig. 2: illustrates a side view of the driving device with opened housing,
- Fig. 3: illustrates a perspective view of an actuator,
- Fig. 4: illustrates a side view of the actuator shown in Fig. 3,
- Fig. 5: illustrates a side view of an actuator,
- Fig. 6: illustrates a side view of an actuator,
- Fig. 7: illustrates a side view of an actuator,
- Fig. 8: illustrates a side view of an actuator,
- Fig. 9: illustrates a side view of an actuator,
- Fig. 10: illustrates a side view of an actuator,
- Fig. 11: illustrates a side view of an actuator,
- Fig. 12: illustrates a side view of a pusher,
- Fig. 13: illustrates a perspective view of a pusher,
- Fig. 14: illustrates a pusher,
- Fig. 15: illustrates a pusher,
- Fig. 16: illustrates a pusher and a control element,
- Fig. 17: illustrates a pusher and a control element,
- Fig. 18: illustrates a pusher and a control element,
- Fig. 19: illustrates a pusher and a control element,
- Fig. 20: illustrates a pusher and a control element,
- Fig. 21: illustrates a cross-sectional view of a pusher and a control element,
- Fig. 22: illustrates a cross-sectional view of a pusher and a control element,
- Fig. 23: illustrates a control element and a guide element,
- Fig. 24: illustrates a control element and a guide element,
- Fig. 25: illustrates a pusher, a control element and a guide element,
- Fig. 26: illustrates a pusher, a control element and a guide element,
- Fig. 27: illustrates a pusher and a guide element, and
- Fig. 28: illustrates a guide element.

### Detailed Description of the Invention

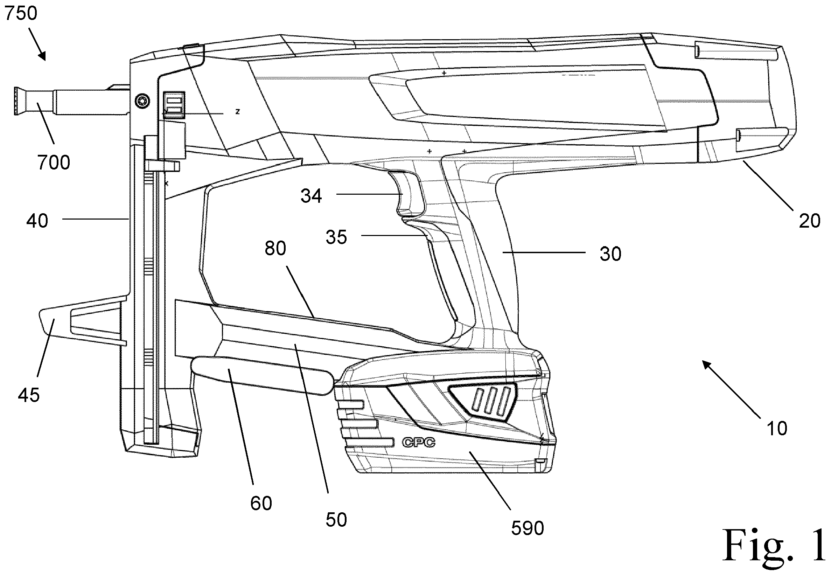

Fig. 1 shows a tool, or driving tool 10 for driving a fastening element, e.g. a nail or bolt, into a substrate in a side view. The driving tool 10 has a working piston configured as a driving piston for driving a fastening element into a substrate, and a housing 20 accommodating the working piston and a piston drive configured to drive the working piston along a working axis from a start position to an end position. The driving tool 10 is configured as a handheld tool and has a grip 30, a magazine 40 and a bridge 50 connecting the grip 30 to the magazine 40. A scaffold hook 60 for hanging the driving tool 10 on a scaffold or the like, a controller 580, signal lines 585 and an electrical battery 590 are fastened to the bridge 50. A trigger 34 and a hand switch 35 are arranged on the grip 30. The driving tool 10 further has a guide channel 700 for guiding the fastening element and a press-on probe 750 for detecting a pressing the driving tool 10 on the substrate. An alignment of the driving tool 10 perpendicular to a surface of the substrate is supported by a support element 45.

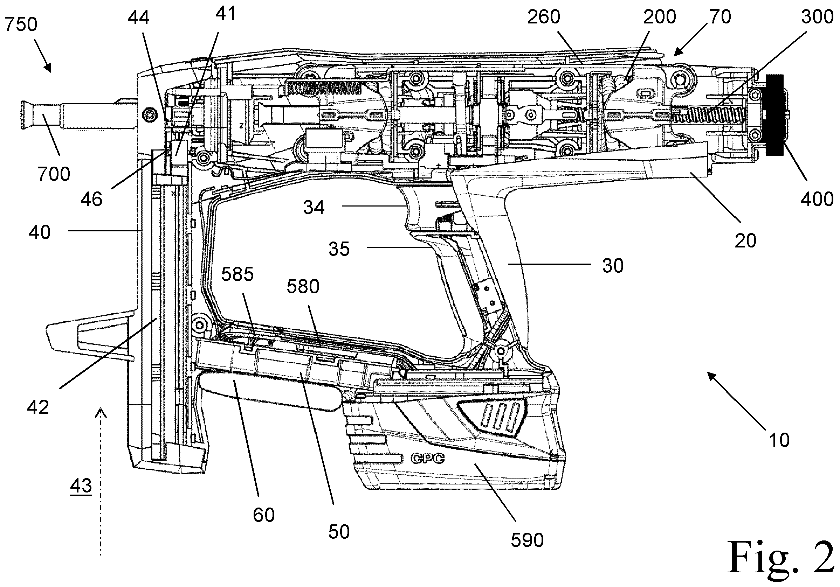

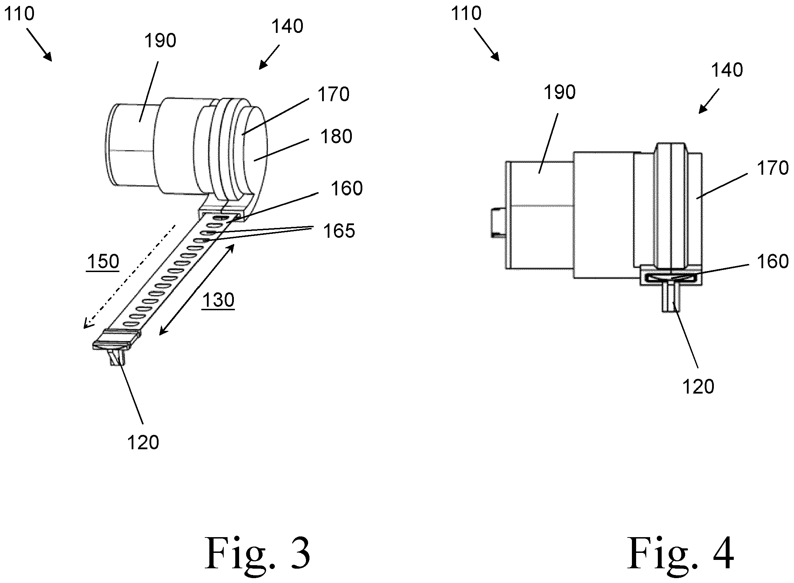

Fig. 2 shows the driving tool 10 with opened housing 20. An actuating device 70 for actuating the working piston is accommodated in the housing 20. The actuating device 70 comprises an electric motor for converting electrical energy from the electrical battery 590 into rotational energy, a transmission 400 for transferring a torque of the electric motor to a spindle drive 300, a roll train 260 for transmitting a force from the spindle drive 300 to a spring 200 and for transmitting a force from the spring 200 to the driving piston. The magazine 40 comprises a feed channel 42 that opens into a receptacle 44 which is configured to temporarily receive a fastening element. The working piston drives the fastening element from the receptacle 44 into a substrate when the piston drive drives the working piston from the start position to the end position. The driving tool 10 further has a piston reset device configured to reset the working piston from the end position to the start position. The piston reset device comprises an actuator as described below with respect to Figs. 3-28.

Figs. 3-4 show an actuator 110, e.g. for resetting the working piston of the driving tool 10 as shown in Figs. 1-2. The actuator 110 comprises a control element 120, such as a pawl for engaging the working piston. The control element 120 moves along a predetermined straight motion path 130. In non-shown embodiments, the motion path may be curved. A first drive 140 drives the control element 120 in a first direction 150 along the motion path 130, such as a forward direction. A pusher 160 formed as a belt transmits a pushing force from the first drive 140 onto the control element 120 and thereby drives the control element 120 in the first direction 150. The actuator 110 further comprises a reel 170, and the pusher 160 is wound on the reel 170. The first drive 140 also works as a second drive that drives the control element 120 in a second direction opposite the first direction 150, such as a rearward direction. To this end, the pusher 160 transmits a pulling force from the second drive onto the control element 160. In a different embodiment (not shown), the first drive is different from the second drive.

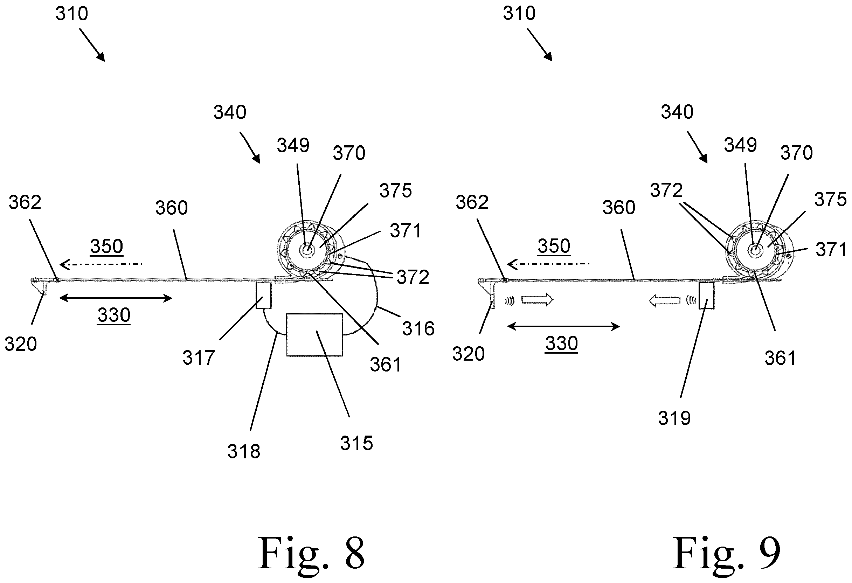

The first drive 140 comprises a rotor (shown in Figs. 8-9) which drives the pusher 160 in the direction of the pushing force, i.e. the first direction 150. The rotor is hidden under a cover 180 and is driven by an electric motor 190 that rotationally drives the rotor. In non-shown embodiments, the motor is an hydraulic and/or pneumatic motor. The rotor engages the pusher 160 to drive the pusher 160. To this end, the rotor comprises a plurality of teeth that engage, or interlock, with a plurality of recesses 165, one after another, provided on the pusher 160 along the first direction 150, to drive the pusher 160.

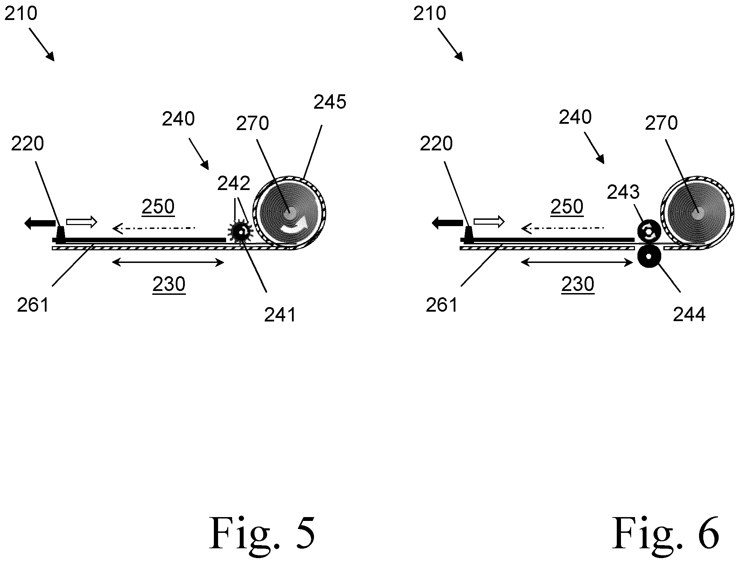

Figs. 5-7 show further embodiments of an actuator 210 comprising a control element 220 that moves along a predetermined motion path 230. A first drive 240 drives the control element 220 in a first direction 250 along the motion path 230. A pusher 261 formed as a belt transmits a pushing force from the first drive 240 onto the control element 220 and thereby drives the control element 220 in the first direction 250. The actuator 210 further comprises a reel 270, and the pusher 261 is wound on the reel 270. A second drive 245 drives the control element 220 in a second direction opposite the first direction 250. To this end, the pusher 261 transmits a pulling force from the second drive 245 onto the control element 261. The first drive 240 is different from the second drive 245 and is arranged outside the reel 270.

In the embodiment shown in Fig. 5, the first drive 240 comprises a rotor 241 rotationally driven by a motor. The rotor 241 comprises a plurality of teeth 242 that engage, or interlock, with a plurality of recesses provided on the pusher 261 along the first direction 250, to drive the pusher 261. In the embodiment shown in Fig. 5, the first drive 240 is different from the second drive 245.

In the embodiment shown in Fig. 6, the first drive 240 comprises a rotor 243 rotationally driven by a motor. The rotor 243 engages the pusher 261 by a friction lock to drive the pusher 160. The pusher 261 is sandwiched between the rotor 243 and a counter-rotor 244 to increase the friction lock. In the embodiment shown in Fig. 6, the first drive 240 also works as the second drive.

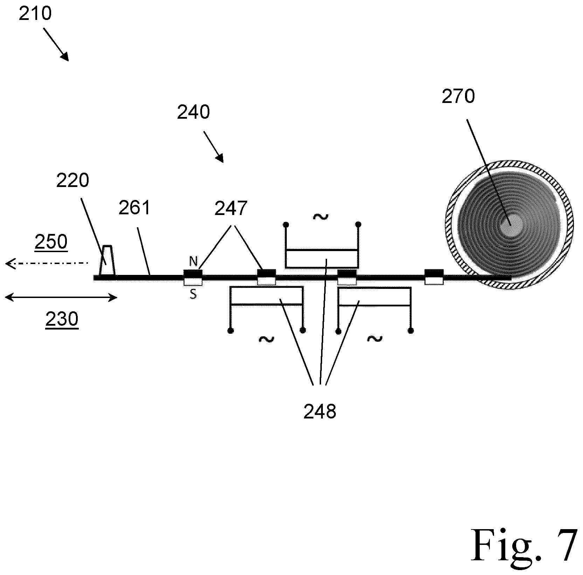

In the embodiment shown in Fig. 7, the first drive 240 comprises a linear motor comprising a plurality of permanent magnets 247 attached to the pusher 261 and a plurality of stationary coils 248 engaging with the magnets 247 by electromagnetic forces. In the embodiment shown in Fig. 7, the first drive 240 also works as the second drive.

Figs. 8-9 show further embodiments of an actuator 310 comprising a control element 320 that moves along a predetermined motion path 330. A first drive 340 drives the control element 320 in a first direction 350 along the motion path 330. A pusher 360 transmits a pushing force from the first drive 340 onto the control element 320 and thereby drives the control element 320 in the first direction 350. The actuator 310 further comprises a reel 370, and the pusher 360 is wound on the reel 370. The reel 370 comprises a rotor 375 of the first drive 340. The pusher 360 is wound on the rotor 375. Further, the first drive 340 comprises a spring 349 that biases the rotor 375 and thus the pusher 360 in the direction of the pushing force. In non-shown embodiments, the pusher comprises the spring. In further embodiments, the first drive consists of the spring, i.e. the spring is the only drive of the pusher in the first direction. A first end 361 of the pusher 360 is attached to the reel 370, whereas a second end 362 of the pusher 360 is attached to the control element 320. The reel 370 comprises a sprocket 371 having a plurality of gear teeth 372. The gear teeth 372 are configured to engage a plurality of holes provided in the pusher 360 to drive the pusher 360. While not visible in Figs. 8-9, the holes may be shaped and formed like the recesses 165 shown in Fig. 3.

The actuator 310 further comprises an electronic controller 315. The controller 315 determines a position and a speed of the control element 320 and controls driving of the control element 320 in dependence of its detected position and/or speed via a control line 316.

In the embodiment shown in Fig. 8, the actuator 310 comprises a position sensor 317 that detects a position of the control element 320 and transmits a signal indicative of a detected position of the control element 320 to the controller 315 via a signal line 318.

In the embodiment shown in Fig. 9, the actuator 310 comprises a wave emitter-receiver 319 that emits a wave, such as an optical or acoustical wave, to the control element 320, and that receives a response wave reflected by the control element 320. The wave emitter-receiver then transmits a signal indicative of a detected position of the control element 320 to the controller 315.

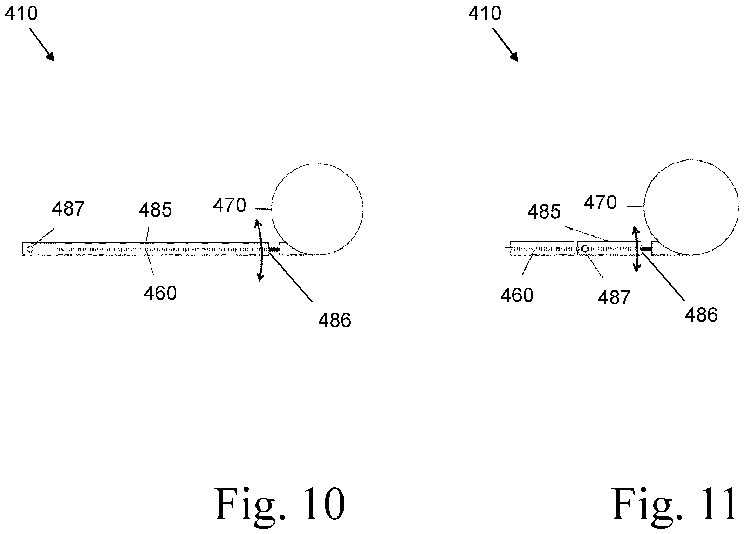

Figs. 10-11 show an actuator 410 comprising a control element (not shown), a pusher 460, and a guide element 485 formed as a guide rail. The actuator 410 further comprises a reel 470, and the pusher 460 is wound on the reel 470. The guide element 485 guides the pusher 460 in the direction of a motion path. The guide element 485 further has an entering end 486 where the pusher 460 enters the guide element 485 when the pusher 460 is unwound from the reel 470. At the entering end 486, the motion path is oriented tangential to the pusher 460 wound on the reel 470. To this end, the entering end 486 pivots about a pivot axis 487 to accommodate for changes of a winding radius of the pusher 460 on the reel 470.

In the embodiment shown in Fig. 10, the whole guide element pivots about the pivot axis 487 which is positioned at a far end of the guide element 485.

In the embodiment shown in Fig. 11, only a section of the guide element pivots about the pivot axis 487 which is positioned at a far end of the section of the guide element 485. Here, the motion path may be curved along the pivoted and unpivoted sections of the guide element 485.

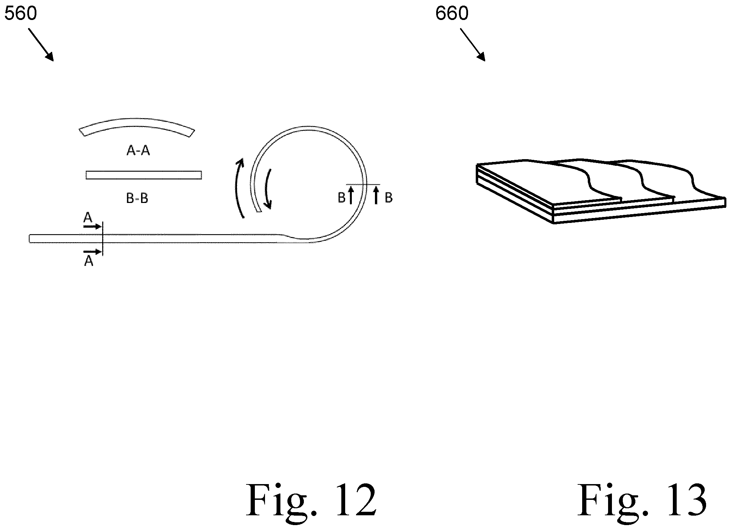

Fig. 12 shows a pusher 560 partly wound on a reel (not shown) and partly unwound from the reel. The pusher 560 is formed as a metal belt and bulges across the direction of the pushing force when the belt transmits the pushing force from a first drive (not shown) onto a control element (not shown), as shown at the cross-section A-A. If wound on the reel, the belt is bent around the reel and does not bulge, i.e. has a flat cross-section, as shown at B-B. In non-show embodiments, the pusher is formed as a wire, such as a metal, alloy or plastic wire.

Fig. 13 shows a pusher 660 formed as a belt consisting of three layers of different metal, alloy, plastic and/or textile material. In non-shown embodiments, the pusher consists of two, four or more layers. The layers may be joint together by lamination, gluing etc.

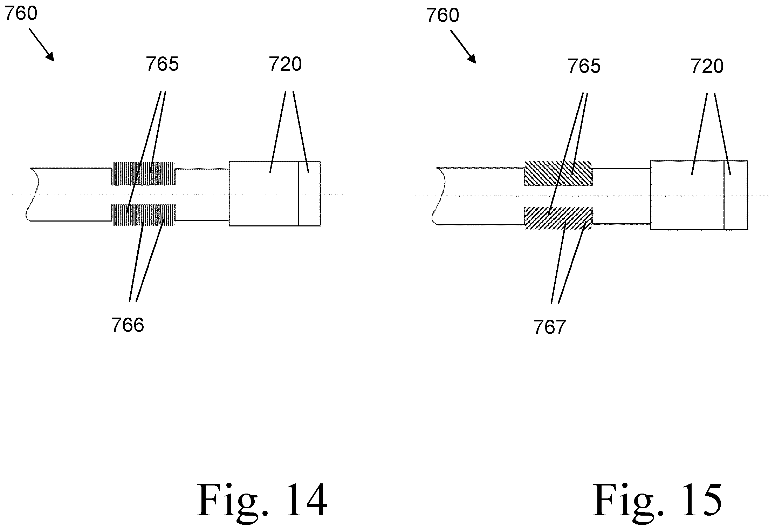

Figs. 14-15 show a pusher 760 and a control element 720 attached to the pusher 760. The pusher 760 comprises two brushes 765 to remove dust or contamination from a guide element (not shown).

In the embodiment shown in Fig. 14, all bristles 766 of the brush 765 are oriented perpendicular to a motion path of the pusher 760.

In the embodiment shown in Fig. 15, the bristles 767 of the brush 765 are inclined from a direction of a motion path by an acute angle. Thereby, undesired friction is reduced when the pusher 760 is pushed by a pushing force (to the right in Fig. 15).

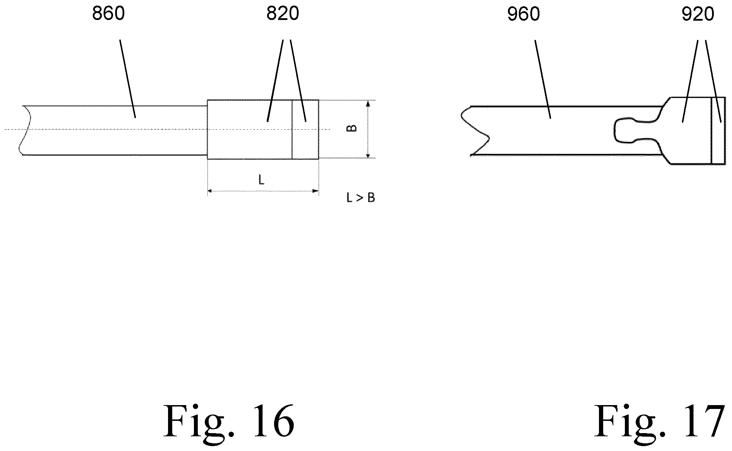

Figs. 16-17 show a top view of two embodiments of a pusher 860, 960 and a control element 820, 920.

In the embodiment shown in Fig. 16, the control element 820 has a rectangular shape in the top view, wherein a length L of the control element 820, as measured in a direction of a motion path, is greater than a width W of the control element 820, as measured across the motion path.

In the embodiment shown in Fig. 17, the control element 920 has a head-and-neck contour and the pusher 960 has a contour corresponding to the head-and-neck contour of the control element 920, such that the control element 920 is interlocked with the pusher 960.

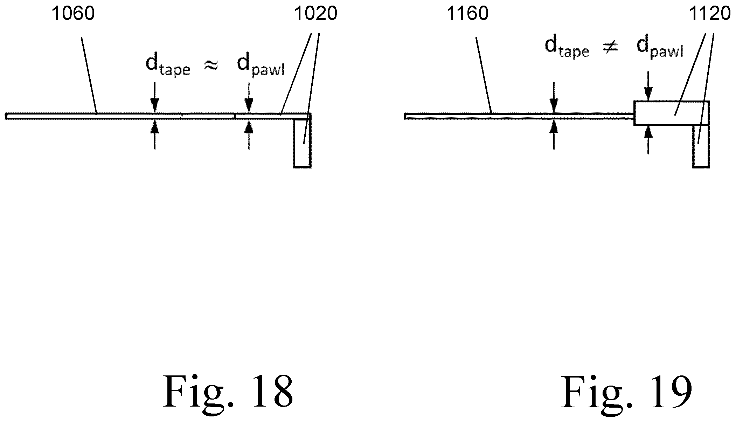

Figs. 18-22 show embodiments of a pusher 1060, 1160, 1260, 1360, 1460 and a control element 1020, 1120, 1220, 1320, 1420.

In the embodiment shown in Fig. 18, a thickness d_{pawl} of the control element 1020 is substantially the same as a thickness dₜₐₚₑ of the pusher 1060.

In the embodiment shown in Fig. 19, a thickness d_{pawl} of the control element 1120 is substantially greater than a thickness dₜₐₚₑ of the pusher 1160.

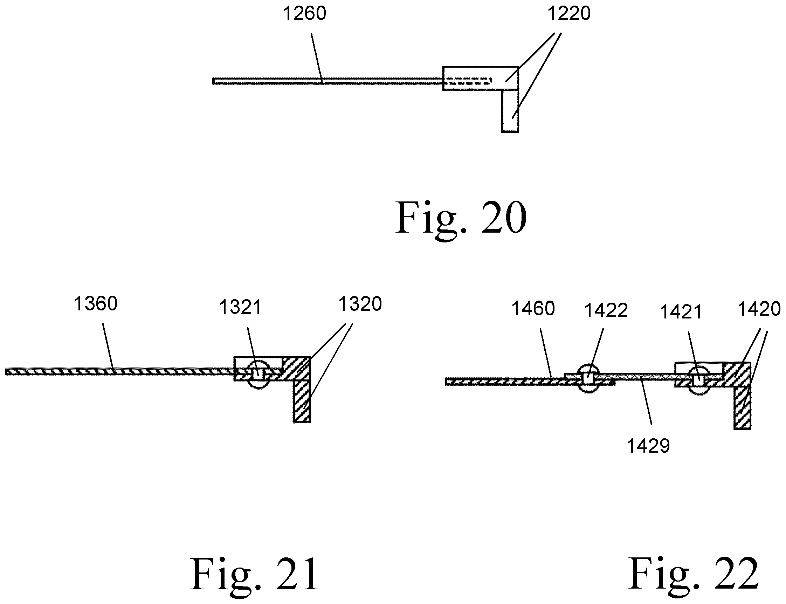

In the embodiment shown in Fig. 20, an end of the pusher 1260 is embedded in the control element 1220.

In the embodiment shown in Fig. 21, an end of the pusher 1360 is attached to the control element 1320, e.g. via a rivet 1321.

In the embodiment shown in Fig. 22, an end of the pusher 1460 is attached to the control element 1420, via an intermediate element 1429. The intermediate element 1429 is attached to the pusher 1460 and the control element 1420 e.g. via rivets 1421, 1422.

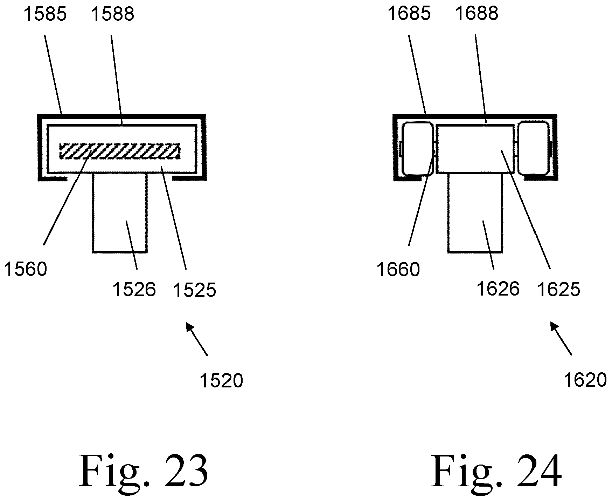

Figs. 23-27 show embodiments of a guide element in a cross-sectional view. In each embodiment, the guide element is configured to guide the pusher and/or the control element in the direction of the motion path.

In the embodiment shown in Fig. 23, a guide element 1585 has a recess 1588 to enclose a base part 1525 of a control element 1520. The control element 1520 further comprises a pawl part 1526 projecting out of the guide element 1585 without contacting the guide element 1585. A pusher 1560, or an end thereof, is embedded in the base part 1525 of the control element 1520.

In the embodiment shown in Fig. 24, a guide element 1685 has a recess 1688 to enclose a base part 1625 of a control element 1620 and two counter-guiding elements 1627 attached to a pusher 1660, as is the base part 1625. The control element 1620 further comprises a pawl part 1626 projecting out of the guide element 1685 without contacting the guide element 1685.

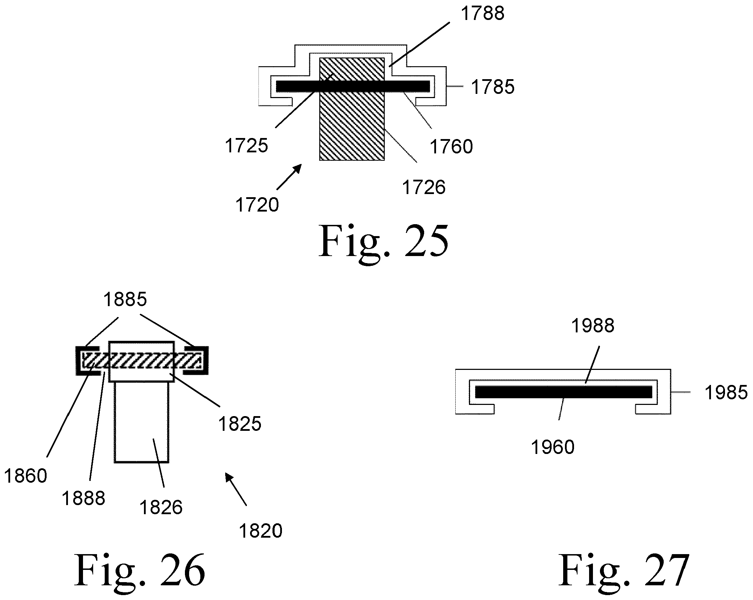

In the embodiment shown in Fig. 25, a guide element 1785 has a recess 1788 to enclose a base part 1725 of a control element 1720 and a pusher 1760 such that both the control element 1720 and the pusher 1760 are guided. The control element 1720 further comprises a pawl part 1726 projecting out of the guide element 1785 without contacting the guide element 1785.

In the embodiment shown in Fig. 26, a guide element 1885 has two guide rails defining a recess 1888 to enclose a pusher 1860 therebetween. A control element 1820 is attached to the pusher 1860 comprising a base part 1825 and a pawl part 1826 and projecting out of the guide element 1885 without contacting the guide element 1885.

In the embodiment shown in Fig. 27, a guide element 1985 has a recess 1988 to enclose a pusher 1960.

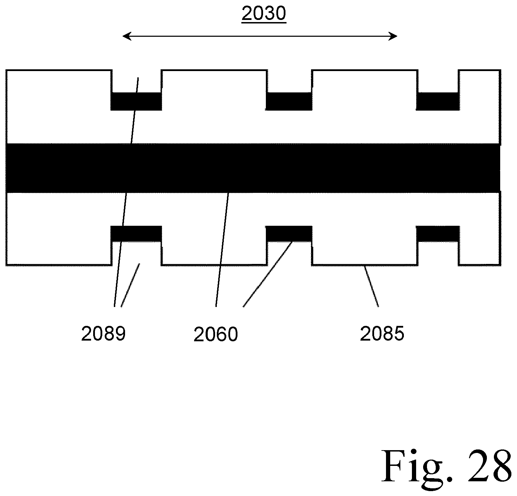

Fig. 28 shows a pusher 2060 and a guide element 2085 formed as a guide rail. The pusher 2060 is guided in the guide element 2085 in a direction of a motion path 2030 of the pusher 2060. The guide element 2085 comprises a plurality of openings 2089 to remove contamination, such as dust, when the pusher 2060 moves along the motion path 2030.

In general, the actuator as described herein above may be used in a number of applications, e.g. sliders in machines, actuation of drawers, operation of sliding doors, retraction of pistons in nailing tools, blinds and shutters, assembly belts and trays, agricultural machinery etc.

The foregoing exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. An actuator, comprising:
- a control element configured to move along a predetermined motion path,
- a first drive that drives the control element in a first direction along the motion path,
- a pusher configured to transmit a pushing force from the first drive onto the control element to drive the control element in the first direction, and
- a reel, wherein the pusher is wound on the reel.

2. The actuator according to claim 1, further comprising a second drive that drives the control element in a second direction opposite the first direction, wherein the pusher is configured to transmit a pulling force from the second drive onto the control element.

3. The actuator according to claim 2, wherein the first drive is the second drive.

4. The actuator according to any of the preceding claims, wherein the first drive comprises a rotor which drives the pusher in the direction of the pushing force.

5. The actuator according to any of the preceding claims, wherein the rotor engages the pusher, in particular by a friction lock and/or an interlock, or a toothing.

6. The actuator according to any of the preceding claims, wherein the pusher comprises a plurality of recesses, or holes arranged along the first direction, and wherein the rotor comprises a plurality of teeth engaging the recesses to drive the pusher.

7. The actuator according to any of the preceding claims, wherein the first drive or the pusher comprises a spring that biases the pusher in the direction of the pushing force.

8. The actuator according to any of the preceding claims, wherein the pusher comprises a belt, in particular a metal, alloy or plastic belt.

9. The actuator according to any of the preceding claims, further comprising a guide element, or guide rail, configured to guide the pusher and/or the control element in the direction of the motion path.

10. The actuator according to claim 9, wherein the guide element has a profile comprising a recess, and wherein the pusher and/or the control element is partly or completely received in the recess to guide the pusher and/or the control element in the direction of the motion path.

11. The actuator according to any of claims 9 and 10, wherein the guide element has an entering end where the pusher enters the guide element when the pusher is unwound from the reel, and wherein the motion path, at the entering end, is oriented tangential to the reel and/or pusher wound on the reel.

12. The actuator according to claim 11, wherein the entering end pivots about a pivot axis to accommodate for changes of a winding radius of the pusher on the reel.

13. The actuator according to any of the preceding claims, further comprising a controller, or electronic controller, configured to determine a position and/or a speed of the control element and to control driving the control element in dependence of a detected position and/or speed.

14. The actuator according to any of the preceding claims, further comprising a position sensor configured to detect a position of the control element and transmit a signal indicative of a detected position of the control element to the controller.

15. A tool, in particular a handheld tool, comprising a working piston configured to move along a working axis, a piston drive configured to drive the working piston along the working axis from a start position to an end position, and a piston reset device configured to reset the working piston from the end position to the start position and comprising an actuator according to any of the preceding claims.
